# EUROPÄISCHE PATENTSCHRIFT

(11) **EP 3 218 675 B1**
(45) Veröffentlichungstag und Bekanntmachung des Hinweises auf die Patenterteilung: **09.01.2019**
(21) Anmeldenummer: 15788407.3
(22) Anmeldetag: 02.11.2015
(51) Int. Cl.: G01D 7/10, G07C 3/00

(54) **VERFAHREN UND VORRICHTUNG ZUR ERFASSUNG, AUSWERTUNG UND DARSTELLUNG VON MESSWERTEN VON MOTOREN ELEKTRISCHER ANTRIEBE**
METHOD AND APPARATUS FOR DETECTING, ASSESSING AND DISPLAYING MEASURED VALUES OF MOTORS OF ELECTRIC DRIVES
PROCÉDÉ ET DISPOSITIF DE DÉTECTION, D'ÉVALUATION ET D'AFFICHAGE DE VALEURS DE MESURE DE MOTEURS D'ENTRAÎNEMENTS ÉLECTRIQUES

(30) Priorität: 14.11.2014 DE 102014223251
(43) Veröffentlichungstag der Anmeldung: 20.09.2017
(73) Patentinhaber: Deutsche Bahn AG, 10785 Berlin (DE)
(72) Erfinder: NEUJAHR, Gerd, 69509 Mörlenbach (DE)
(86) Internationale Anmeldenummer: PCT/EP2015/075443
(87) Internationale Veröffentlichungsnummer: WO 2016/074967

(56) Entgegenhaltungen:
- EP-A2- 2 309 282
- DE-A1- 3 237 407
- DE-A1- 19 733 001

## Beschreibung

Die Erfindung betrifft ein Verfahren zur Erfassung, Auswertung und Darstellung von Messwerten von Motoren elektrischer Antriebe und eine Vorrichtung zur Umsetzung des Verfahrens.

In zahlreichen technischen Vorrichtungen werden Umstellvorgänge zwischen mechanischen Zuständen mithilfe von Elektromotoren realisiert. Häufig sind die Umstellvorgänge in dem Sinne zyklisch, dass immer zwischen mindestens zwei definierten Zuständen hin- und hergestellt wird. Beispiele für solche elektrisch angetriebenen Anlagen sind Schranken für Bahnübergänge, Antriebe zum Umstellen der Weichenlage bei schienengebundenem Verkehr oder Antriebe zum Öffnen und Schließen von Fenstern, Toren, etc. Die Stellmotoren laufen dabei in reproduzierbarer Weise von definierten Anfangs- zu definierten Endpunkten und wieder zurück.
Wenn die Funktionsfähigkeit und der technische Zustand solcher Anlagen überwacht werden sollen, ist es u.a. erforderlich, eine Aussage über die Schwergängigkeit der Anlage zu treffen. Hierzu werden beispielsweise die elektrischen Kennkurven der Antriebsmotoren ermittelt und ausgewertet. Eine Schwergängigkeit, die z.B. durch Verschleiß hervorgerufen werden kann, würde sich dadurch bemerkbar machen, dass eine höhere Leistungsaufnahme des Motors gemessen wird, als durch Referenzwerte vorgegeben ist.
Um den technischen Zustand der elektrisch angetriebenen Anlage beurteilen zu können, ist eine Auswertung der Messwert-Daten erforderlich.
Bei Weichenantrieben wird beispielsweise hierfür der Stromverlauf während eines Umstellvorgangs aufgenommen und mit einer Referenzkurve verglichen.
Die Darstellung der Daten erfolgt dabei an einem Ausgabegerät, das ein gewöhnliches Koordinatensystem aufweist, bei dem als Abszisse die Messzeit und als Ordinate die Stromstärke bzw. die Differenz zwischen den gemessenen Stromwerten und der Referenzkurve gewählt wird.
Bei einer solchen Darstellung ist jedoch ein Vergleich mit früheren oder späteren Messungen nur schwer anschaulich zu machen.

Die DE 197 33 001 A1 beschreibt ein Verfahren zur Erfassung, Auswertung und Darstellung von Messwerten, bei dem die Mess- oder Vergleichswerte in alphanumerischer Form dargestellt werden, wobei der alphanumerischen Darstellung eines Mess- oder Vergleichswertes jeweils ein Farbwert in der Darstellung zugeordnet wird, der jeweils in Abhängigkeit von dem festgestellten Vergleichswert gewählt wird.

Das Dokument DE 32 37 407 A1 (D1) zeigt ein Verfahren und eine Vorrichtung zur Erfassung, Auswertung und Darstellung von Messwerten von Motoren, bei denen ein Drehzahlgeber Messwerte misst und diese an einen Rechner übermittelt, welcher sie verarbeitet und die Messergebnisse auf einer Anzeige als eine Kurvenschar darstellt, die farbig kodiert sein kann.

Aufgabe der vorliegenden Erfindung ist es, ein Verfahren bereitzustellen, mit dem der technische Zustand von Motoren elektrischer Antriebe nicht nur zu einem gegebenen Zeitpunkt beurteilt werden kann, sondern auch die zeitliche Entwicklung des Zustands erfasst und veranschaulicht wird, sodass auch Aussagen über einen zu erwartenden Wartungsaufwand getroffen werden können und Rückschlüsse bzgl. der Ursachen von Zustandsänderungen gezogen werden können. Weiterhin soll eine Vorrichtung bereitgestellt werden, welche das Verfahren umsetzt.

Diese Aufgaben werden durch das erfindungsgemäße Verfahren gemäß Anspruch 1 und die zugehörige Vorrichtung gemäß Anspruch 4 gelöst. Vorteilhafte Weiterbildungen sind Gegenstände der abhängigen Ansprüche. Das erfindungsgemäße Verfahren nach Anspruch 1 stellt ein Messverfahren dar, bei dem die Messwerte von Motoren elektrischer Antriebe erfasst, ausgewertet und dargestellt werden. Als Messwerte können insbesondere die von mindestens einem Sensor gemessenen elektrischen Kennwerte des Motors verwendet werden. Weiterhin können auch noch Rahmenparameter wie Temperatur, Feuchtigkeit, etc. gemessen und in die Auswertung einbezogen werden. Die Messwerte werden an eine Datenverarbeitungsanlage übermittelt und dort gespeichert und ausgewertet. Bei der Auswertung kann es vorteilhaft sein, die Messwerte geeignet zu bearbeiten. So kann eine Auswertefunktion beispielsweise die Messwerte mit Referenzwerten unter den gegebenen Rahmenbedingungen vergleichen und als weiter zu betrachtende Daten nur die Differenzen zwischen den Messwerten und den Referenzwerten verwenden. Da elektrische Motoren, wie sie z.B. bei Schranken-, Weichen-, Fenster- oder Torantrieben verwendet werden, ein zyklisches Betriebsmuster haben, lassen sich die Messwerte in Abhängigkeit von der mechanischen Stellung der angetriebenen Komponenten über einen mehrere Stellvorgänge umfassenden Zeitraum hinweg miteinander vergleichen. Wenn sich beispielsweise das Anlaufverhalten des Motors aufgrund einer verschleißbedingten Schwergängigkeit der Mechanik verändert, wird sich der Leistungsaufnahmebedarf des Antriebs über die Zeit allmählich erhöhen. Um solch einen Trend bereits frühzeitig erkennen zu können, müssen die Daten aus einem längeren Zeitraum miteinander verglichen werden. Bei einer Anzeige der Daten auf einer zweidimensionalen Bildschirmoberfläche oder einem zweidimensionalen Papierausdruck ist eine mehrdimensionale Darstellung nur dann übersichtlich, wenn die Information aufbereitet wird. Dies erfolgt erfindungsgemäß, indem zwei Zeitkoordinaten betrachtet werden. Die Messwerte innerhalb eines Umlaufzyklus des Antriebs werden in Abhängigkeit von der einen Zeitkoordinate beschrieben, die als Umlaufzeit T_{U} bezeichnet wird. Die zweite Zeitkoordinate wird als Vergleichszeit T_{V} bezeichnet und gibt den Zeitpunkt jedes einzelnen Umlaufs an. Zwei oder mehr aufeinanderfolgende Umläufe des Antriebs finden demnach zu zwei oder mehr unterschiedlichen Zeitpunkten T_{V1} und T_{V2}, etc. statt. Zu jedem dieser Zeitpunkte gibt es einen Messwerteverlauf während eines Umlaufs z = f_{TVi}(T_{U}). Um die Abhängigkeit der Daten von beiden Zeitkoordinaten zu beschreiben, werden erfindungsgemäß beide Koordinatenachsen senkrecht zueinander gewählt. In x-Richtung kann beispielsweise T_{V} dargestellt werden, während die y-Richtung durch T_{U} charakterisiert wird. Um nun auf einer zweidimensionalen Darstellungsebene auch noch die zu jedem (yi; zi)-Paar gehörenden Werte der Daten im Koordinatensystem anzuzeigen, könnte eine perspektivische Darstellung gewählt werden. Da diese jedoch schnell unübersichtlich werden kann, wird erfindungsgemäß eine Projektion der z-Achse auf die x-y-Ebene betrachtet. Um dabei eine Information über die Zahlenwerte der Daten darstellen zu können, werden die zi-Werte farblich kodiert. Die Abfolge von farbigen Datenpunkten in y-Richtung zeigt dabei die Differenz zwischen Datenwert und Referenzwert innerhalb einer Umlaufzeit T_{U} an, die bei einem Umlauf zur Zeit T_{Vi} gemessen wurde. Beim nächsten Umlauf des Stellantriebs in die gleiche Richtung werden die Datenwerte bei T_{V(i+1)} in der gleichen Weise dargestellt. Da die (y(i+1); z(i+1))-Wertepaare zu den (yi; zi)-Wertepaaren in Richtung der T_{V}-Achse parallelverschoben sind, werden beide Messungen nebeneinander dargestellt und können zur Auswertung leicht miteinander verglichen werden. Datenwerte für gleiche Phasen des Umstellvorgangs bei unterschiedlichen Stellvorgängen liegen dabei immer auf einer Parallelen zur T_{V}-Achse. Dadurch kann die Entwicklung der Messwerte bei jeder Phase des Umstellvorgangs effizient ausgewertet werden, indem man die Entwicklung der Farbe entlang von Parallelen zur x- bzw. T_{V}-Achse analysiert.

Besonders vorteilhaft wird die Informationsmenge dadurch reduziert, dass nicht jeder einzelne z-Wert, sondern nur bestimmte Werteklassen kodiert werden, die sich nach definierten Toleranzwerten für die Daten richten. Durch Vergleich der Daten mit Referenzwerten und einer Vorgabe von einem bis wenigen Toleranzbereichen wird mithilfe von wenigen Farbwerten eine aussagekräftige Darstellung erreicht. Anhand der Farbe des Datenpunkts ist somit erkennbar, welche Toleranzgrenze von dem Datenpunkt (y; z) überschritten wird.

Weiterhin ist es vorteilhaft, wenn bei der Auswertung der Daten auf einen Untersuchungsbedarf des Antriebs hingewiesen wird. Dies kann beispielsweise dann erfolgen, wenn ein Datenpunkt eine zu definierende Toleranzgrenze, die als Nachweis eines Schadens oder einer Gefährdung des Antriebs bekannt ist, mindestens einmal erreicht hat.

Weiterhin werden die Datenpunkte entlang einer Parallelen zur Vergleichszeit-Achse daraufhin analysiert, ob eine Veränderung der Datenpunkte in Richtung einer zu definierenden Toleranzgrenze erfolgt. Wenn also ein Datenwert bei einer bestimmten Umlaufphase des Antriebs allmählich immer höhere Toleranzschwellen überschreitet, ist damit zu rechnen, dass ein kritischer Zustand des Antriebs folgt, sodass auch hier eine Meldung an der Ausgabeeinheit erfolgt, die darauf hinweist, dass die Anlage vom Service-Personal untersucht werden muss.

Die Ansprüche 4 bis 6 betreffen eine Vorrichtung zur Realisierung des Verfahrens aus den vorigen Ansprüchen.

Erfindungsgemäß vorgesehen ist eine Vorrichtung, welche die Messwerte von Motoren elektrischer Antriebe erfasst, speichert, auswertet und darstellt.
Die Vorrichtung besteht aus mindestens einem Mess-Sensor, der mit einer Datenverarbeitungsanlage verbunden ist, die über eine Ausgabeeinheit zur Darstellung der Auswerteergebnisse sowie über Mittel zur Dateneingabe verfügt. Die Auswertung der Messdaten erfolgt mit Hilfe der Datenverarbeitungsanlage. Als Messwerte können insbesondere die von mindestens einem Sensor gemessenen elektrischen Kennwerte des Motors verwendet werden. Weiterhin kann die Vorrichtung auch noch Rahmenparameter wie Temperatur, Feuchtigkeit, etc. messen und in die Auswertung einbeziehen.
Für die Auswertung der Daten kann es vorteilhaft sein, wenn die Vorrichtung die Messwerte geeignet bearbeitet. So kann die Vorrichtung beispielsweise mit Hilfe einer Auswertefunktion die Messwerte mit Referenzwerten unter den gegebenen Rahmenbedingungen vergleichen und als weiter zu betrachtende Daten nur die Differenzen zwischen den Messwerten und den Referenzwerten verwenden. Die Vorrichtung betrachtet erfindungsgemäß zwei Zeitkoordinaten. Sie beschreibt die Messwerte innerhalb eines Umlaufzyklus des Antriebs in Abhängigkeit von der Umlaufzeit T_{U}. Die zweite Zeitkoordinate wird als Vergleichszeit T_{V} bezeichnet und gibt den Zeitpunkt jedes einzelnen Umlaufs an. Zwei oder mehr aufeinanderfolgende Umläufe des Antriebs finden demnach zu zwei oder mehr unterschiedlichen Zeitpunkten T_{V1} und T_{V2}, etc. statt. Zu jedem dieser Zeitpunkte gibt es einen Messwerteverlauf während eines Umlaufs z = f_{TVi}(T_{U}).
Die Darstellung der Daten erfolgt in einem zweidimensionalen Koordinatensystem mit zwei senkrecht zueinander stehenden Koordinatenachsen, mit T_{V} als Abszisse (x-Achse) und T_{U} als Ordinate (y-Achse).
Die Vorrichtung zeigt auf ihrer Ausgabeeinheit die zu jedem (yi; zi)-Paar gehörenden Werte der Daten im Koordinatensystem an, indem sie die Messwerte auf die T_{U}-Achse projiziert und dabei die durch die zi-Werte gegebenen Messwerte. farblich kodiert. Die Abfolge von farbigen Datenpunkten in y-Richtung zeigt dabei die Differenz zwischen Datenwert und Referenzwert innerhalb einer Umlaufzeit T_{U} an, die bei einem Umlauf zur Zeit T_{Vi} gemessen wurde. Beim nächsten Umlauf des Stellantriebs in die gleiche Richtung stellt die Vorrichtung auf ihrer Ausgabeeinheit die Datenwerte bei T_{V(i+1)} in der gleichen Weise dar. Da die (y(i+1); z(i+1))-Wertepaare zu den (yi; zi)-Wertepaaren in Richtung der T_{V}-Achse parallelverschoben sind, können die beiden nebeneinander dargestellten Messungen zur Auswertung leicht miteinander verglichen werden.

Besonders vorteilhaft reduziert die Vorrichtung die Informationsmenge dadurch, dass sie nicht jeden einzelnen Messwert im Messbereich mit einer eigenen Farbe kodiert, sondern nur bestimmte Werteklassen, die sich nach definierten Toleranzwerten für die Daten richten. Durch Vergleich der Daten mit Referenzwerten und einer Vorgabe von einem bis wenigen Toleranzbereichen weist die Vorrichtung den z-Werten nur wenige Farben entsprechend zu. Anhand der Farbe des Datenpunkts ist somit erkennbar, welche Toleranzgrenze von dem Datenpunkt (y; z) überschritten wird.
Vorteilhaft weist die Vorrichtung bei der Auswertung der Daten auf einen Untersuchungsbedarf des Antriebs hin. Dies erfolgt beispielsweise dann, wenn ein Datenpunkt eine zu definierende Toleranzgrenze, die als Nachweis eines Schadens oder einer Gefährdung des Antriebs bekannt ist, mindestens einmal erreicht hat.
Weiterhin analysiert die Vorrichtung die Datenpunkte entlang einer Parallelen zur Vergleichszeit-Achse daraufhin, ob eine Veränderung der Datenpunkte in Richtung einer zu definierenden Toleranzgrenze erfolgt. Wenn ein Datenwert bei einer bestimmten Umlaufphase des Antriebs allmählich immer höhere Toleranzschwellen überschreitet, gibt die Vorrichtung an der Ausgabeeinheit eine Meldung aus, die darauf hinweist, dass die Anlage vom Service-Personal untersucht werden muss.

Die Erfindung wird im Folgenden anhand eines Ausführungsbeispiels, das durch zwei Figuren dargestellt wird, näher erläutert.

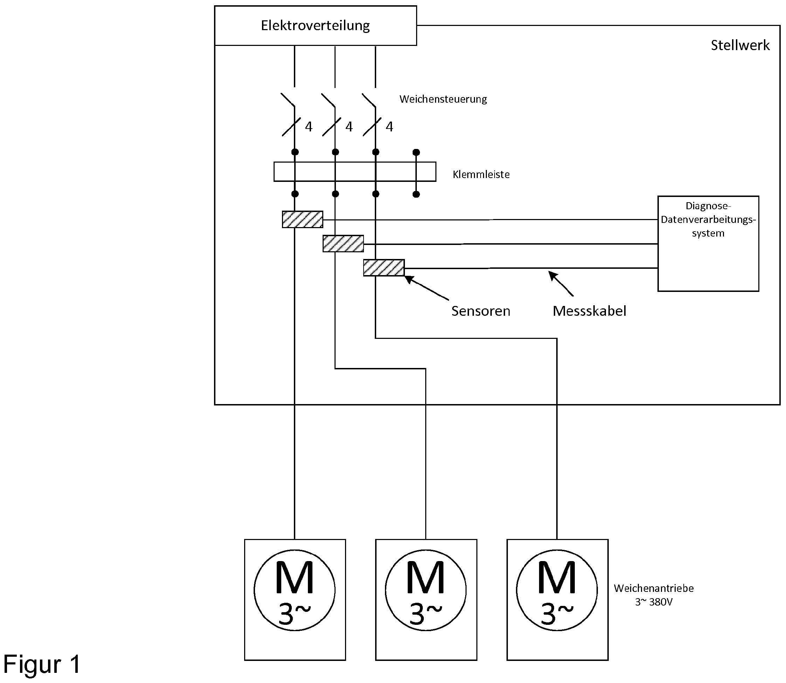

Fig. 1 zeigt beispielhaft die Analyse von Weichen im Schienennetz eines spurgebundenen Verkehrssystems. Mithilfe von Magnetfeldsensoren, die beispielsweise als 3D- oder mehrdimensionale Magnetfeldsensoren ausgestaltet sind, wird mithilfe der gemessenen Magnetfelder von einer Datenverarbeitungsanlage die Stromstärke und die Drehrichtung des Weichenantriebs ermittelt.
Die Stromverlaufskurve wird bei der Analyse der Daten als Maß für die Schwergängigkeit der Weiche verwendet.
In der Abbildung ist jedem 4-adrigen Weichenantriebskabel ein einfacher Strich zugewiesen; es werden also 3 Weichen mit der Diagnosevorrichtung überwacht. Die Diagnosevorrichtung misst direkt an der bestehenden Verkabelung des jeweiligen Weichenantriebs, in der Nähe einer Klemmleiste. Idealerweise wird hierfür die Klemmleiste zwischen Außenkabel und Innenkabel verwendet.

Die Übertragung der Messdaten erfolgt mithilfe einer geeigneten Schnittstelle. In diesem Beispiel wird eine 4-20 mA Schnittstelle verwendet. Je nach Umweltbedingungen und Entfernungen sind auch andere drahtgebundene Schnittstellen möglich, genauso wie drahtlose, z.B. Funkschnittstellen.

Die Steuerung des Messvorgangs, die Aufbereitung der Messdaten und die Weiterleitung an ein Diagnosesystem sind Funktionen der angeschlossenen Datenverarbeitung.

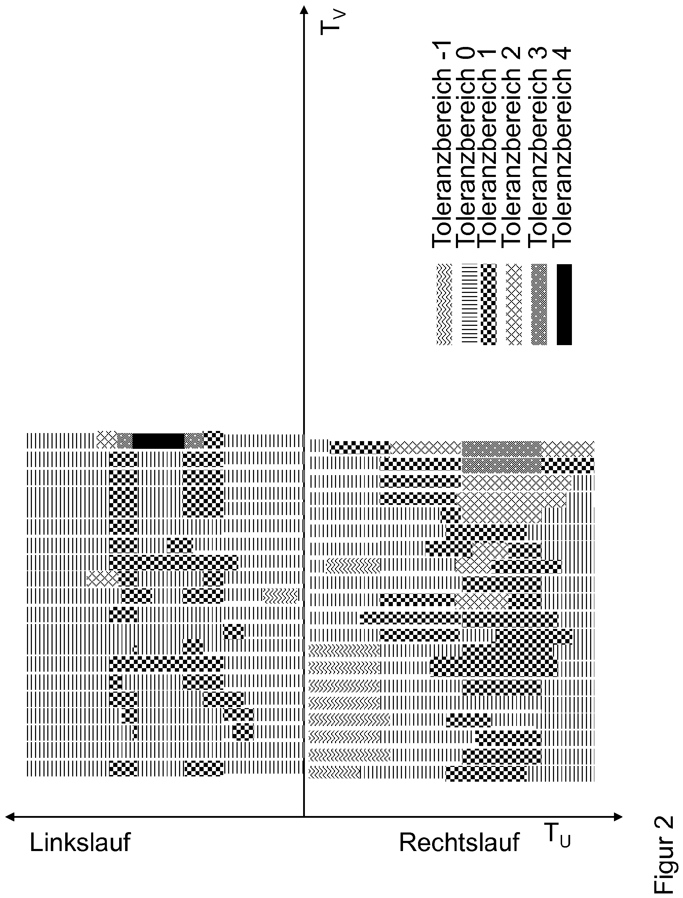

Fig. 2 zeigt eine beispielhafte Darstellung der Messdaten für die Auswertung der Daten des Weichenantriebs. Die gemessenen Stromwerte werden von den in einer Datenbank gespeicherten Referenzwerten eines intakten Antriebs subtrahiert.
Die Unterschiede zu den Referenzwerten, ΔI, werden in Toleranzbereiche eingeteilt. Keine oder nur geringe Abweichungen vom Referenzwert sind in diesem Beispiel dem Toleranzbereich T0 zugeordnet. Größere Abweichungen den Toleranzbereichen T1 bis T4. Bei Erreichen des Toleranzbereichs T4 ist eine akute Gefährdung der Funktionsfähigkeit des Antriebs gegeben.
Negative Abweichungen weisen auf eine bessere Schwergängigkeit des Antriebs im Vergleich zu den Referenzwerten auf. Diese Messwerte sind dem Toleranzbereich T-1 zugeordnet. Jedem Toleranzbereich ist nun eine eigene Farbe bei der Darstellung der Messwerte zugewiesen.
Die Farbe Grün ist in diesem Beispiel dem Toleranzbereich T0 zugewiesen und steht somit für eine Übereinstimmung der Messdaten mit den Referenzwerten bzw. eine nur unerhebliche Abweichung. T1 bis T4 sind beispielsweise die Farben Gelb, Orange, Hellrot und Dunkelrot zugeordnet, T-1 die Farbe Blau.

In x-Richtung ist die Vergleichszeit T_{V} aufgetragen, die y-Richtung zeigt die Messwerte während eines Umlaufs (T_{U}) des Antriebs. Dabei ist ausgehend von der x-Achse in der Mitte der Figur nach unten die Bewegung des Weichenantriebs in eine Rechtslage dargestellt, während die Daten, die von der Mitte nach oben dargestellt sind, eine Auslenkung des Antriebs in die Linkslage beschreiben. Entlang der T_{V} -Achse sind mehrere Umläufe nebeneinander dargestellt. Der Weichenantrieb kommt dabei jeweils nach etwa der gleichen Umlaufzeit T_{UE} in die Endlage. Gleiche Phasen des Umlaufes sind daher entlang von Parallelen zur T_{V} -Achse miteinander vergleichbar.
Im unteren Abschnitt der Figur 2 (Rechtslauf) ist zu sehen, wie bei etwa der Hälfte der Umlaufdauer über mehrere Umläufe hinweg die Werte allmählich zunehmend vom Referenzwert abweichen. Dies ist dadurch erkennbar, dass bei T_{U} im Bereich der halben Umlaufszeit entlang einer Parallelen zur T_{V} -Achse die Farbe von Grün über Gelb zu Orange gewandert ist. Bei den ersten Umläufen zu Beginn der Messungen war der Messwert also noch in Übereinstimmung mit dem Referenzwert, während er sich mit zunehmender Zahl der Umläufe mehr und mehr von seinem Referenzwert entfernt hat.
Dies ist ein Hinweis darauf, dass sich der Zustand des Antriebs verschlechtert hat im Vergleich zum Beginn der Messungen und somit ein Wartungsbedarf besteht, bevor der Antrieb einen kritischen Zustand erreicht. Bei der Analyse der Daten wird daher ein Auftrag zur Inspektion des Weichenantriebs ausgelöst. Hierbei wird durch Vergleich mit in der Datenbank abgelegten Daten eine Vorhersage über den zu erwartenden zeitlichen Schadensverlauf angezeigt. Anhand dieser Prognose kann der optimale Wartungszeitpunkt festgelegt werden.
Im oberen Bereich der Figur 2 (Linkslauf) ist beispielhaft zu sehen, wie ein plötzlicher Übergang von grünen Farbwerten auf rote erfolgt. Hier ist durch ein Ereignis ein Schaden an der Weiche aufgetreten, der sofort behoben werden muss. Entsprechend wird eine Alarmmeldung ausgegeben und eine sofortige Überprüfung der Anlage ausgelöst. Die zur Reparatur benötigten Ersatzteile werden aus Vergleich mit den in einer Datenbank abgelegten Daten ermittelt und angezeigt.

## Patentansprüche

1. Verfahren zur Erfassung, Auswertung und Darstellung von Messwerten von Motoren elektrischer Antriebe, wobei von mindestens einem Sensor Messwerte gemessen werden, die an eine Datenverarbeitungsanlage übermittelt werden, **dadurch gekennzeichnet, dass** zwei Zeitkoordinaten betrachtet werden, wobei die Messwerte innerhalb eines Umlaufzyklus des Antriebs in Abhängigkeit von der einen Zeitkoordinate beschrieben werden, welche Umlaufzeit genannt wird, und die aufeinanderfolgenden Umläufe des Antriebs in Abhängigkeit der zweiten Zeitkoordinate beschrieben werden, welche Vergleichszeit genannt wird, wobei die Messwerte eines Umlaufzyklus des elektrischen Antriebs gespeichert und gegebenenfalls mit einer Auswertefunktion bearbeitet werden, diese Daten dann mit einer Referenzkurve verglichen werden, wobei die Abweichungen zwischen den Daten und der Referenzkurve farblich kodiert werden und derart auf einer Ausgabeeinheit angezeigt werden, dass die beiden Zeitkoordinaten senkrecht zueinander dargestellt werden, und die farbig codierten Datenpunkte jeweils an einer Position der zweidimensionalen Anzeigefläche angezeigt werden, die den zugehörigen Koordinaten entlang der Umlaufzeitachse und der Vergleichszeit-achse entspricht, sodass sich bei mehreren Messzyklen eine Aneinanderreihung der farbig kodierten Datenpunkte ergibt.

2. Verfahren zur Erfassung, Auswertung und Darstellung von Messwerten von Motoren elektrischer Antriebe gemäß Anspruch 1, wobei die Kodierung der Farbwerte für die Abweichungen der Daten von den Referenzwerten in Abhängigkeit von Toleranzbereichen gewählt wird, sodass anhand der Farbe des Datenpunkts bei der Ausgabe der Daten erkennbar ist, welche Toleranzgrenze von den Messwerten bei dem jeweiligen Datenpunkt überschritten wird.

3. Verfahren zur Erfassung, Auswertung und Darstellung von Messwerten von Motoren elektrischer Antriebe gemäß einem der vorigen Ansprüche 1 bis 2, wobei auf einen Untersuchungsbedarf des Antriebs hingewiesen wird, wenn ein Datenpunkt eine zu definierende Toleranzgrenze mindestens einmal erreicht hat oder wenn der Vergleich der Datenpunkte entlang einer Parallelen zur Vergleichszeit-Achse eine Veränderung der Datenpunkte in Richtung einer zu definierenden Toleranzgrenze ergibt.

4. Vorrichtung zur Erfassung, Auswertung und Darstellung von Messwerten von Motoren elektrischer Antriebe, wobei mindestens ein Sensor Messwerte misst und diese an eine Datenverarbeitungsanlage übermittelt, **dadurch gekennzeichnet, dass** die Datenverarbeitungsanlage so eingerichtet ist, dass sie zur Auswertung Zeitkoordinaten verwendet, wobei sie die Messwerte innerhalb eines Umlaufzyklus des Antriebs in Abhängigkeit von der einen Zeitkoordinate beschreibt, welche Umlaufzeit genannt wird, und sie die aufeinanderfolgenden Umläufe des Antriebs in Abhängigkeit der zweiten Zeitkoordinate beschreibt, welche Vergleichszeit genannt wird, wobei sie die Messwerte eines Umlaufzyklus des elektrischen Antriebs speichert und gegebenenfalls mit einer Auswertefunktion bearbeitet, diese Daten dann mit einer Referenzkurve vergleicht, wobei sie die Abweichungen zwischen den Daten und der Referenzkurve farblich kodiert und sie derart auf einer Ausgabeeinheit anzeigt, dass sie die beiden Zeitkoordinaten senkrecht zueinander darstellt, und dabei die farbig codierten Datenpunkte jeweils an einer Position der zweidimensionalen Anzeigefläche anzeigt, die den zugehörigen Koordinaten entlang der Umlaufzeitachse und der Vergleichszeitachse entspricht, sodass sich bei mehreren Messzyklen eine Aneinanderreihung der farbig kodierten Datenpunkte ergibt.

5. Vorrichtung zur Erfassung, Auswertung und Darstellung von Messwerten von Motoren elektrischer Antriebe gemäß Anspruch 4, wobei die Datenverarbeitungsanlage so eingerichtet ist, dass sie die Kodierung der Farbwerte für die Abweichungen der Daten von den Referenzwerten in Abhängigkeit von Toleranzbereichen wählt, sodass anhand der Farbe des Datenpunkts an der Ausgabeeinheit erkennbar ist, welche Toleranzgrenze die Messwerte an dem jeweiligen Datenpunkt überschreiten.

6. Vorrichtung zur Erfassung, Auswertung und Darstellung von Messwerten von Motoren elektrischer Antriebe gemäß einem der vorigen Ansprüche 4 bis 5, wobei die Datenverarbeitungsanlage so eingerichtet ist, dass sie mithilfe einer Meldung auf einen Untersuchungsbedarf des Antriebs hinweist, wenn ein Datenpunkt eine zu definierende Toleranzgrenze mindestens einmal erreicht hat oder wenn der Vergleich der Datenpunkte entlang einer Parallelen zur Vergleichszeit-Achse eine Veränderung der Datenpunkte in Richtung einer zu definierenden Toleranzgrenze ergibt.

## Claims

1. Method for detecting, evaluating and displaying measurement values of motors of electric drives, wherein there are measured by at least one sensor measurement values which are transmitted to a data processing unit, **characterised in that** two time coordinates are considered, wherein the measurement values are described within a rotation cycle of the drive in accordance with one time coordinate, which is called the rotation time, and the sequential rotations of the drive are described in accordance with the second time coordinate, which is called the comparison time, wherein the measurement values of a rotation cycle of the electric drive are stored and where applicable processed with an evaluation function, these data are then compared with a reference line, wherein the deviations between the data and the reference line are colour-coded and indicated on an output unit in such a manner that the two time coordinates are displayed perpendicularly to each other, and the colour-coded data points are each indicated at a position of the two-dimensional display surface which corresponds to the associated coordinates along the rotation time axis and the comparison time axis so that, in the event of a plurality of measurement cycles, a sequential arrangement of the colour-coded data points is produced.

2. Method for detecting, evaluating and displaying measurement values of motors of electric drives according to claim 1, wherein the encoding of the colour values for the deviations of the data from the reference values is selected in accordance with tolerance ranges so that with reference to the colour of the data point it can be identified when the data are output which tolerance limit is exceeded by the measurement values at the respective data point.

3. Method for detecting, evaluating and displaying measurement values of motors of electric drives according to any of the preceding claims 1 to 2, wherein a requirement for examination of the drive is indicated when a data point has reached a tolerance limit which is intended to be defined at least once or when the comparison of the data points along a parallel line with respect to the comparison time axis produces a change of the data points in the direction of a tolerance limit which is intended to be defined.

4. Device for detecting, evaluating and displaying measurement values of motors of electric drives, wherein at least one sensor measures measurement values and transmits these to a data processing unit, **characterised in that** the data processing unit is configured in such a manner that it uses time coordinates for evaluation, wherein it describes the measurement values within a rotation cycle of the drive in accordance with one time coordinate, which is called the rotation time, and it describes the sequential rotations of the drive in accordance with the second time coordinate, which is called the comparison time, wherein it stores the measurement values of a rotation cycle of the electric drive and where applicable processes them with an evaluation function, then compares these data with a reference line, wherein it colour-codes the deviations between the data and the reference line and indicates them on an output unit in such a manner that it displays the two time coordinates perpendicularly to each other and in this instance indicates the colour-coded data points at a position of the two-dimensional display surface which corresponds to the associated coordinates along the rotation time axis and the comparison time axis so that, in the event of a plurality of measurement cycles, a sequential arrangement of the colour-coded data points is produced.

5. Device for detecting, evaluating and displaying measurement values of motors of electric drives according to claim 4, wherein the data processing unit is configured in such a manner that it selects the encoding of the colour values for the deviations of the data from the reference values in accordance with tolerance ranges so that, with reference to the colour of the data point on the output unit, it can be seen which tolerance limit the measurement values exceed at the respective data point.

6. Device for detecting, evaluating and displaying measurement values of motors of electric drives according to any of the preceding claims 4 to 5, wherein the processing data unit is configured in such a mannerthat it indicates using a notification a requirement for examination of the drive when a data point has reached a tolerance limit which is intended to be defined at least once or when the comparison of the data points along a parallel line with the comparison time axis produces a change of the data points in the direction of a tolerance limit which is intended to be defined.

## Revendications

1. Procédé de détection, d'évaluation et d'affichage de valeurs de mesure de moteurs d'entraînements électriques, dans lequel on mesure par au moins un capteur des valeurs de mesure qui sont transférées à un équipement de traitement de données, **caractérisé en ce que** deux coordonnées de temps sont prises en compte, dans lequel les valeurs de mesure à l'intérieur d'un cycle de rotation de l'entraînement sont décrites en fonction de la première coordonnée de temps qui est dénommée temps de rotation et les rotations successives de l'entraînement sont décrites en fonction de la seconde coordonnée de temps, qui est dénommée temps de comparaison, dans lequel les valeurs de mesure d'un cycle de rotation de l'entraînement électrique sont mémorisées et éventuellement traitées avec une fonction d'évaluation, et ces données sont comparées ensuite à une courbe de référence, dans lequel les divergences entre les données et la courbe de référence sont codées en couleur et sont affichées sur une unité de sortie de sorte que les deux coordonnées de temps soient représentées perpendiculairement l'une à l'autre et que les points de données codés en couleur soient respectivement affichés dans une position de la surface d'affichage bidimensionnelle qui correspond aux coordonnées associées le long de l'axe de temps de rotation et de l'axe de temps de comparaison de sorte que l'on obtienne, au cours de plusieurs cycles de mesure, une succession des points de données codés en couleur.

2. Procédé de détection, d'évaluation et d'affichage de valeurs de mesure de moteurs d'entraînements électriques selon la revendication 1, dans lequel le codage des valeurs de couleurs pour les divergences des données vis-à-vis des valeurs de référence est choisi en fonction de plages de tolérance de sorte que l'on puisse reconnaître sur base de la couleur du point de données à la sortie des données les limites de tolérance qui sont dépassées par les valeurs de mesure au point de données respectif.

3. Procédé de détection, d'évaluation et d'affichage de valeurs de mesure de moteurs d'entraînements électriques selon l'une quelconque des revendications précédentes 1 à 2, dans lequel, lors d'un besoin d'analyse de l'entraînement, on indique si un point de données a atteint au moins une fois une limite de tolérance à définir ou si la comparaison des points de données le long d'une parallèle à l'axe de temps de comparaison fournit une modification des points de données dans la direction d'une limite de tolérance à définir.

4. Dispositif de détection, d'évaluation et d'affichage de valeurs de mesure de moteurs d'entraînements électriques, dans lequel au moins un capteur mesure des valeurs de mesure et les transfère à un équipement de traitement de données, **caractérisé en ce que** l'équipement de traitement de données est réglé de manière à utiliser pour l'évaluation des coordonnées de temps, dans lequel les valeurs de mesure à l'intérieur d'un cycle de rotation de l'entraînement sont décrites par la première coordonnée de temps, qui est dénommée temps de rotation, et les rotations successives de l'entraînement sont décrites en fonction de la seconde coordonnée de temps, qui est dénommée temps de comparaison, dans lequel il mémorise les valeurs de mesure d'un cycle de rotation de l'entraînement électrique et les traite éventuellement avec une fonction d'évaluation et compare ensuite ces données à une courbe de référence, dans lequel les divergences entre les données et la courbe de référence sont codées en couleur et sont affichées sur une unité de sortie de sorte qu'il représente les deux coordonnées de temps perpendiculairement l'une à l'autre et affiche les points de données codés en couleurs respectivement dans une position de la surface d'affichage bidimensionnelle qui correspond aux coordonnées associées le long de l'axe de temps de rotation et de l'axe de temps de comparaison de sorte que l'on obtienne, au cours de plusieurs cycles de mesure, une succession des points de données codés en couleurs.

5. Dispositif de détection, d'évaluation et d'affichage de valeurs de mesure de moteurs d'entraînements électriques selon la revendication 4, dans lequel l'équipement de traitement de données est réglé de manière à choisir le codage des valeurs de couleur pour les divergences des données vis-à-vis des valeurs de référence en fonction de plages de tolérances de sorte qu'à la lumière de la couleur du point de données sur l'unité de sortie, on puisse reconnaître les limites de tolérance qui dépassent les valeurs de mesure au point de données respectif.

6. Dispositif de détection, d'évaluation et d'affichage de valeurs de mesure de moteurs d'entraînement électriques selon l'une quelconque des revendications 4 à 5, dans lequel l'équipement de traitement de données est réglé de manière à indiquer au moyen d'un message lors d'un besoin d'analyse de l'entraînement si un point de données a atteint au moins une fois une limite de tolérance à définir ou si la comparaison des points de données le long d'une parallèle à l'axe de temps de comparaison indique une modification des points de données dans la direction d'une limite de tolérance à définir.
